Europäisches Patentamt

**European Patent Office**

Office européen des brevets

(11) Publication number: **0 143 588**
A2

# (12) EUROPEAN PATENT APPLICATION

(21) Application number: **84307978.1**

(22) Date of filing: **16.11.84**

(51) Int. Cl.⁴: **A 01 M 7/00**

(30) Priority: **18.11.83 GB 8330758**

(71) Applicant: **Montandon, Brian, Wychwood Rectory Lane, Wyton Huntingdon Cambs. (GB)**

(43) Date of publication of application: **05.06.85**
**Bulletin 85/23**

(72) Inventor: **Montandon, Brian, Wychwood Rectory Lane, Wyton Huntingdon Cambs. (GB)**

(84) Designated Contracting States: **AT BE CH DE FR GB IT LI LU NL SE**

(74) Representative: **Brunner, Michael John et al, GILL JENNINGS & EVERY 53-64 Chancery Lane, London WC2A 1HN (GB)**

(54) **Distributing device.**

(57) A liquid spraying device, e.g. for spraying fertilizer onto a lawn has a control unit 25. The control unit, mounted adjacent a wheel 11 of the liquid spraying device, contains a switch SW2 which opens and closes in response to the close passage of a magnet 28 mounted on the wheel. The repeated operation of the switch enables control circuitry within the control unit to illuminate a red light emitting diode LED2 if the speed is greater than the selected speed, or to illuminate a green light emitting diode LED1 if the speed is too slow. When at, or close to, the selected speed neither light emitting diode is illuminated.

BRIAN MONTANDON.                          Ref:90/2171/02
DISTRIBUTING DEVICE.

The present invention relates to a distributing device and, more particularly, to a device which is intended to be moved at a substantially constant speed in order to obtain a uniform distribution of the medium being distributed by the device. The device may distribute liquids, particulate solids, vaporous or gaseous materials.

There are many agricultural operations, for example, spraying of fertilizers, herbicides, fungicides etc., which require a substantially constant speed to be maintained by the spraying device in order that a uniform distribution of the liquid is achieved. An accurate, uniform spraying is required in order to achieve the desired results and to avoid wastage. Similarly, in other fields, uniform distribution of coatings, for example paint, is desirable.

One method of achieving a uniform distribution of a liquid is to drive a pump from the transmission of a vehicle so that the rate of distribution varies in proportion with the speed of travel of the vehicle across the ground. This avoids the need to control the speed of movement, but does involve complex drive arrangements for the pump. Particularly with hand operated machinery the cost is prohibitive.

According to the present invention a distributing device comprises an outlet for a medium to be distributed and a speed indicating control device comprising means for setting a desired speed of movement of the outlet; means for sensing the speed of movement of the outlet; and means for indicating to a user when the speed of the outlet is above or below the set desired speed.

The invention also includes a speed indicating control device as immediately hereinbefore defined.

Further, the invention includes a rate indicating control device comprising means for setting a desired rate of occurrence of a series of events, the rate of occurrence of which is to be controlled by a user; means for sensing the occurrence of each event; means for indicating to the user when the rate of occurrence is above the desired rate; and a means for indicating to the user when the rate of occurrence is below the desired rate.

In one particular form the invention comprises a device for spraying lawn fertilizer liquids, weedkillers etc., in which case the outlet comprises a spray head and the device includes means for supplying liquid to the spray head at a substantially constant rate. However, it is envisaged that the device could be applied to the distribution of particulate solids, such as seeds, or gases or vapours.

Preferably the sensing means comprises a magnetically actuated switch and the indicating means comprises a first light which is switched on to indicate that the speed is above the desired speed and a second light which is switched on to indicate that the speed is below the desired speed, the lights being switched on by an electronic control. The lights may flash to indicate too high or too low a speed respectively, but with decreasing or increasing speed respectively may become permanently lit.

Preferably the electronic control enables different desired speeds to be set.

In this specification the term "speed" is used to indicate a speed or narrow range of speeds.

The device may include a carriage, one or more wheels on the carriage, and a container for the liquid to be dispensed, the speed of rotation of the wheel being sensed by the sensing means. When the sensing means includes a magnetically actuated switch the wheel may have a magnet mounted thereon for actuating the switch. To provide a substantially constant supply of liquid to the spray head a liquified gas pressure container may be provided as a source of pressure, or, alternatively, the liquid can be pressurized by air above its surface, using an integral pump formed in the top of the container.

The device may include one or more additional spray heads connected either to the container or to other containers mounted on the carriage.

One example of a device according to the present invention will now be described with reference to the accomanying drawings in which:-

Figures 1A and 1B show, respectively, a perspective view of the device from one side and a partial perspective view of the other side;

Figure 2 is a circuit diagram of a first electronic control;

Figure 3 is a circuit diagram of a second electronic control; and,

Figure 4 illustrates the relationship between various voltage signals in the circuit of Figure 2 at different operational states.

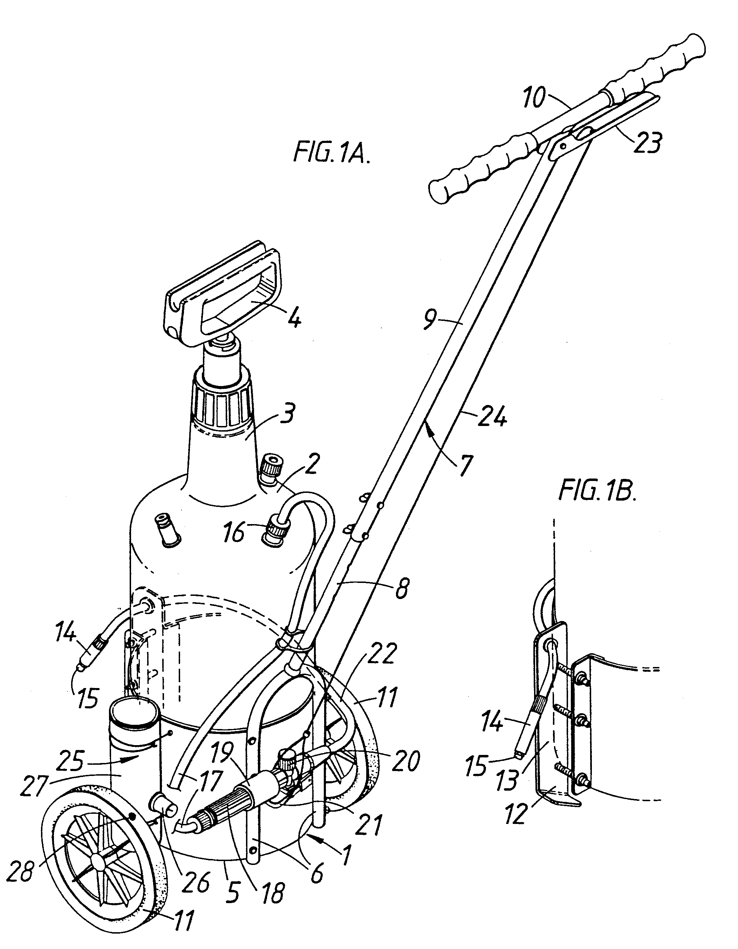

The device shown in Figures 1A and 1B is a liquid spraying device for spraying lawns with liquid fertilizer, weed killer etc., and comprises a carriage 1 and a container 2 for the liquid to be sprayed, the container having an integral pump 3 which has a handle 4 attached to the end of a shaft of the pump and which can be lifted up and down to pressurize air over the top of the liquid within the container 2. The container may be one of those already marketed for garden spraying, no modification of the container being necessary.

The container 2 is particularly strong, due to the requirement to contain sufficient pressure within it for spraying, and this strength can be used to avoid the need to have expensive frame members on the carriage 1. A thin flexible metal band or strap 5 is used to encircle the lower part of the container 2, the free ends of the strap being joined together on the front of the carriage (see Figure 1B) so as to grip the lower part of the container.

Attached to the strap, preferably by welding, are two supporting legs 6 of a handle 7 which has first and second telescopic sections 8, 9 and a T-shaped hand grip 10.

An axle (not shown) passes through a pair of holes in the bottom of the strap 5, the holes being positioned so that when the strap is wrapped around the bottom of the container they are diametrically opposed, and a pair of wheels 11 are attached, one at each end of the axle.

At the front of the carriage (Figure 1B) a support leg 12 is formed at the junction between the ends of the strap 5 and a support bracket 13 is formed above the leg to hold a spray head 14 having an adjustable nozzle 15. Liquid under pressure is supplied from the outlet 16 of the container through a flexible hose 17, through a fixed tube 18 which is held in fixed position in a mounting tube 19 mounted at the top end of the legs 6 of the handle 7 generally transverse to the direction of extension of the handle. At the other end of the tube 18 a conventional valve 20 operated by a lever 21 controls the further flow of liquid through a rigid pipe 22 to the tip 14.

Control of the valve lever 21 is achieved by means of a trigger 23 mounted immediately adjacent the underside of one end of the hand grip 10, a plastic covered multi-strand steel wire 24 extending from the trigger 23 to the lever 21 to transfer movement of the trigger to the lever.

One or more additional spray heads may be mounted on the device. Between the or each additional spray head and its associated container is a conventional valve, operated by a lever, which controls the flow. The or each lever may be operated by hand, controlled by the trigger 23, or controlled by another trigger which might, for example, be mounted adjacent the underside of the other end of the hand grip 10. Any additional spray head may be mounted so as to be easily releasable from its fixing means, thus enabling it to be used as a roaming applicator.

Adjacent one wheel, and positioned between the wheel and the strap 5, is a control unit 25. The control unit has a switch 26 and a pair of light emitting diodes (not shown). The control unit is an electronic unit powered by a 9 volt dry cell located within the tubular housing 27 of the unit 25.

In use, when it is desired to spray liquid from the nozzle 15 over, for example, a lawn, the switch on the control unit 25 is selected to one of three desired speed settings and the user then pushes the carriage over the lawn, squeezing the trigger to permit fluid to be sprayed from the nozzle.

It is envisaged that the container, handle fixings, foot support, axle housing and housing for the electronic components could be moulded as a single moulding to reduce assembly time and cost. The moulding could also incorporate a guideway for the valve lever operating wire to run under the container to enable the lever and valve to be positioned at the front, immediately adjacent the nozzle.

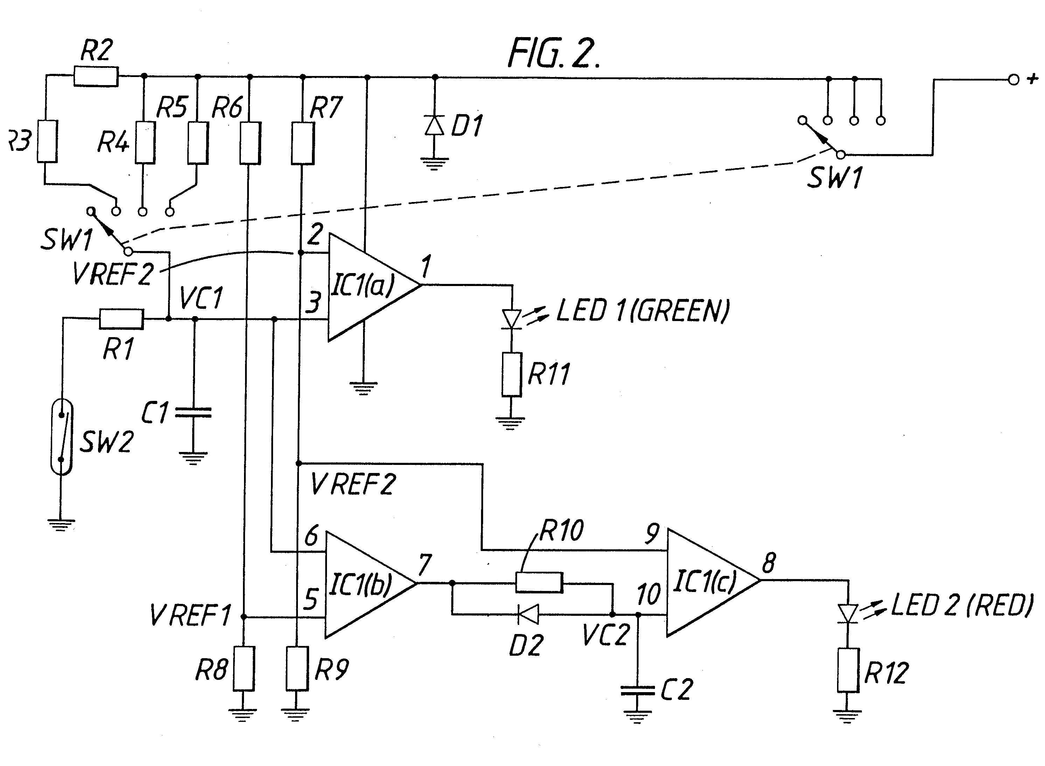

In order to spray the liquid uniformly over the lawn the user requires to walk at the desired speed, or a narrow range of speeds around the desired speed. As the user pushes the carriage a magnet 28 mounted on the wheel '11 periodically actuates a magnetic reed switch SW2 (see Figure 2) as the wheel rotates. The control circuit, as will be described later, lights the red light emitting diode if the speed at which the carriage is being moved is too fast and the green light emitting diode if the speed is too slow. By watching the light emitting diodes and adjusting his speed so that neither light is illuminated, the user can thus control his speed to lie within the desired range, and thus the liquid is sprayed uniformly over the lawn.

The circuit shown in Figure 2 is supplied from a nominal 9 volt battery and has a switch SW1 which is selectable between an off position, as shown, and any one of three "on" positions, each of which sets a different desired speed.

The battery voltage will drop, from its nominal 9 volts, by discharge due to use and/or age. As the battery voltage drops, the LED's will become fainter and the battery should be replaced when they are too faint for convenient viewing. When the battery voltage has dropped below the threshold level required by the operational amplifiers IC1(a), IC1(b) and IC1(c), neither of the LED's will light, and the battery should be replaced. The condition of the battery may be conveniently assessed by switching on the switch SW1 whilst the device is stationary; the circuit is capable of functioning if either of the LED's lights up.

As long as the battery voltage is high enough for the circuit to function, the sensitivity of the circuit's visual output to changes in frequency of the cycle of switch SW2 (and therefore, to changes in speed of the device) is unchanged. This arises from the voltages VREF1 and VREF2 being percentages of the battery voltage and not fixed voltage levels.

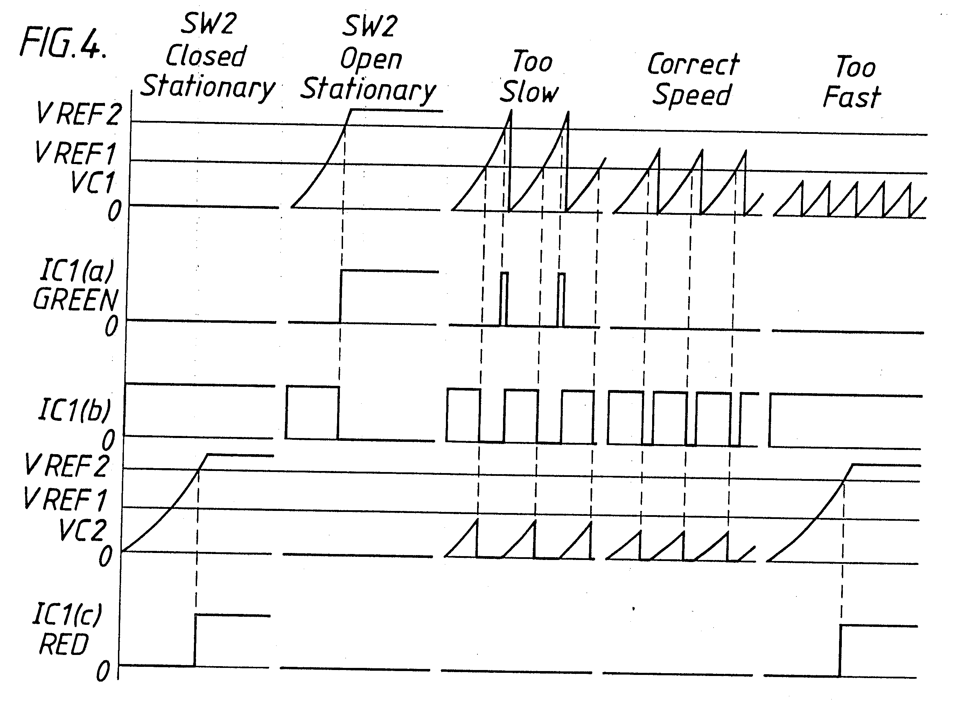

The following description should also be read in conjunction with Figure 4.

If the battery voltage is above the threshold voltage required by the operational amplifiers IC1(a), IC1(b) and IC1(c), the above battery condition check is achieved in one of two ways, depending on whether the switch SW2 is in the open or closed position.

With the switch SW2 in the open position, as would be the case when the wheel is stationary but with the magnet away from the switch, the battery condition check is carried out by the circuit operating in the following manner:

Capacitor C1 is charged by the resistor chain R2, R3 (or R4 or R5, according to the position of switch SW1). This voltage VC1 thus appears at pin3 on the operational amplifier IC1(a) and will increase at a rate generally dependent upon the time constant of capacitor C1 and the resistor chain R2, R3 (or R4 or R5, according to the position of switch SW1). Voltage VC1 is compared against the reference voltage VREF2, produced by the potential divider R7 and R9, and which appears at pin 2 of the operational amplifier IC1(a). When voltage VC1 exceeds the reference voltage VREF2, the operational amplifier IC1(a), which like the other operational amplifiers is used as a comparator in this circuit, switches on and provides a voltage at its pin 1. Current then flows through LED1 causing it to light. LED1 is coloured green, and, in operation, is used to indicate that the device is running too slowly.

With switch SW2 in the closed position, the condition check is carried out by the circuit operating in the following manner:

Capacitor C1 cannot charge and therefore LED1 cannot be lit. The voltage VC1 will be virtually zero and therefore pin 6 of the operational amplifier IC1(b) will be at a low voltage. The pin 5 of the operational amplifier IC1(b) will, however, be at the

high voltage VREF1 due to the potential divider R6 and R8, and this will cause the operational amplifier IC1(b) to switch on and apply a voltage, via resistor R10 to capacitor C2 and to pin 10 of operational amplifier IC1(c). Capacitor C2 will begin to charge. The pin 9 of operational amplifier IC1(c) is held at the high voltage VREF2 and the operational amplifier IC1(c) will be switched off until the voltage VC2 across capacitor C2 rises to a little above VREF2, when it will begin to conduct through pin 8, causing LED2 to light. LED 2 is coloured red, and, in use is used to indicate that the device is running too fast.

The delay in the illumination of LED2 is provided by the time constant of resistor R10 and capacitor C2, and is quite long - some 1.2 seconds.

This delay is necessary to prevent LED2 flashing intermittently under normal, or correct-speed operating conditions.

In operation the switch SW2 is neither permanently open nor permanently closed, but opens and closes repeatedly.

The voltage VC1 which appears across capacitor C1 and thus at pins 3 and pin 6 of operational amplifiers IC1(a) and IC1(b) respectively is of saw tooth type wave form varying in magnitude between 0 volts and a positive voltage, the value of which will depend upon the speed of the device and hence the frequency of closure of switch SW2 and the value of the resistance R2 and R3 or R4 or R5, whichever is used.

If the speed of the device is so low that the peak value of voltage VC1 exceeds VREF2, IC1(a) will turn on during the time VC1 is greater than VREF2 and the green LED1 will light during the same time indicating that the speed is too slow. At the same speed IC1(b) will alternately be turned off and on as VC1 exceeds and then falls below VREF1, thus discharging C2, through its internal impedance, to ground. Therefore VC2 will not reach the level of VREF2 before being discharged and so the red LED2 will not light.

If the device is at the correct speed, the value of peak voltage VC1 will be less than VREF2 thus ensuring that the green LED1 does not light, but will still be greater than VREF1 ensuring that C2 is discharging sufficiently frequently to prevent the red LED2 lighting. Thus neither LED is illuminated. This tells the user that he is at, or close to, the optimum speed.

As the speed of the wheel increases from the correct speed the capacitor C1 has less time to charge before SW2 closes again thus discharging it. Thus the peak value of the voltage VC1, across capacitor C1 is reduced, and when this peak voltage does not exceed VREF1, IC1(a) will be turned off and IC1(b) will be turned on. Capacitor C2 will then start to charge up through R10 until VC2 is greater than VREF2 (about 1.2 seconds later). IC1(c) will then turn on and the red LED2 will light, indicating that the speed is too fast.

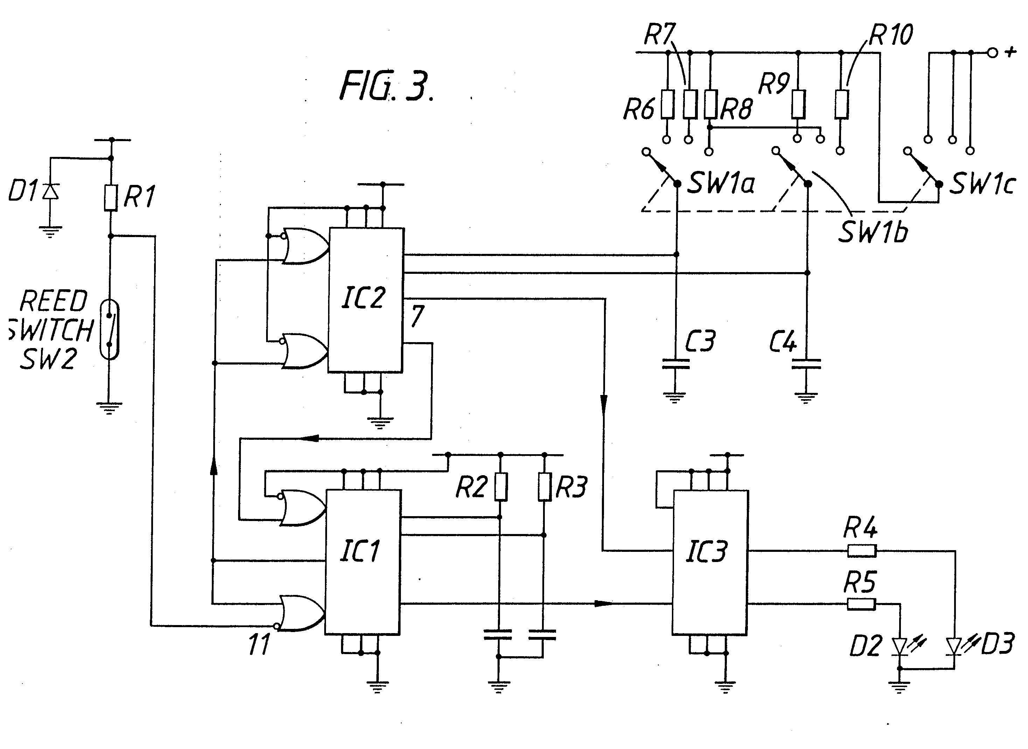

The circuit shown in Figure 3 utilizes different techniques from that shown in Figure 2 in that monostable multivibrator integrated circuits (type CD 4538B) are employed together with a BCD-to-7 segment driver (type CD 4511B), operating light emitting diodes.

Digital techniques utilizing high speed integrated circuits of this design require protection against the bounce effect of the magnetic reed switch as this could otherwise give false counting.

When the machine is switched on by operation of switch SW1 the voltage at terminal 11 of monostable multivibrator IC1 falls, the falling edge starting a 0.1 second pulse. The pulse cannot be re-triggered until after 0.1 seconds have elapsed when the pulse has finished. The rising edge of the 0.1 pulse triggers the too slow and too fast pulses, the too slow pulse being negative going and the too fast pulse being positive going. The too slow pulse is fed directly to the integrated circuit IC3 and causes the too slow light emitting diode to light if, and only if, the output of the integrated circuit IC2 at terminal 7 is high. If the too slow pulse is not retriggered before it is completed the output will go high, lighting the light emitting diode D3.

The too fast pulse is fed to another monostable multivibrator integrated circuit IC1 and if this integrated circuit does not see a rising edge in 1.2 seconds then its output will go high and this output goes to the integrated circuit IC3 where it causes the too fast light emitting diode D2 to be lit provided that the too slow LED is off. This feature is incorporated so that both LEDs cannot light at the same time when the machine is stationary, thus avoiding excessive battery drain. The timing for the too slow and too fast functions and also therefore the range between them is provided by suitable selection of the resistors R6,R7,R8,R9,R10 and capacitors C3 and C4.

## CLAIMS

1. A rate indicating control device comprising means for setting a desired rate of occurrence of a series of events, the rate of occurrence of which is to be controlled by a user; means for sensing the occurrence of each event; means for indicating to the user when the rate of occurrence is above the desired rate; and a means for indicating to the user when the rate of occurrence is below the desired rate.

2. A device according to claim 1, for use in controlling speed of movement, wherein the setting means comprises means for setting a desired speed; the sensing means comprises means for sensing the speed of movement; and the indicating means comprises means for indicating when the speed of movement is above or below the desired speed set.

3. A device according to claim 1 or claim 2, wherein the sensing means comprises a magnetically actuated switch.

4. A device according to any of claims 1 to 3, wherein the indicating means comprises a first light which is switched on to indicate that the rate of occurrence or speed is above the desired rate or speed and a second light which is switched on to indicate that the rate of occurrence or speed is below the desired rate or speed.

5. A device according to claim 4, wherein the first and/or second lights are caused to flash to provide the required indications.

6. A device according to any of claims 1 to 5, including an electronic control means into which the rate of occurrence or speed can be set.

7.   A device for distributing one or more mediums, the device comprising one or more outlets for the or each medium and a rate indicating control device according to any of the preceding claims, wherein the setting means comprises means for setting a desired speed of movement of the outlet or all of the outlets; the sensing means comprises means for sensing the speed of movement of the outlet or all of the outlets; and the indicating means comprises means for indicating to the user when the speed of the outlet or all of the outlets is above or below the selected speed.

8.   A device according to claim 7 for spraying one or more liquids, including means for containing the or each liquid to be sprayed, and wherein the or each outlet comprises a spray head.

9.   A device according to claim 8, including means for supplying liquid to the or each spray head at a substantially constant rate.

10.  A device according to any of claims 7 to 9, including a carriage, one or more wheels on the carriage, and the speed of rotatation of the wheel being sensed by the sensing means.

11.  A device according to claim 10, when dependent on claim 3, wherein the wheel has a magnet mounted thereon for actuating the magnetic switch.

12.  A device according to claim 9, further including one or more liquified gas pressure containers for pressurizing one or more liquids.

13. A garden spray device comprising one or more containers for one or more liquids to be sprayed; one or more spray nozzles; a wheeled carriage on which the or each container is mounted, the carriage including means for mounting one or more spray nozzles in a fixed position thereon; and a control device including means for setting a desired speed of movement of the carriage, means for sensing the speed of movement of the carriage; and means for indicating to a user when the speed is above or below the desired set speed.

14. A device according to claim 13, further including a handle on the carriage and means mounted adjacent the handle for switching on or off the supply of liquid to one or more of the nozzles.

15. A device according to claim 13 or claim 14, wherein the speed of movement of the carriage is sensed by means of a magnetic reed switch mounted adjacent the wheel and a magnet mounted on the wheel so as to rotate with the wheel in a path passing the reed switch.

16. A device according to any of claims 13 to 15, wherein the control device is settable to one of a number of predetermined speeds.

17. A device according to any of claims 13 to 16, wherein the indicating means comprises a pair of light emitting diodes, one of which is switched on when the speed is below the set speed and the other of which is switched on when the speed is above the set speed.

18. A device according to claim 17, wherein the first and second light emitting diodes are switched

- 14 -

0143588

on and off, i.e. flash, to indicate speed below or above the set speed respectively.

19. A garden spray device substantially as described with reference to Figures 1A, 1B, 2 and 4 or Figures 1A, 1B and 3.

20. A rate indicating control device substantially as described with reference to Figures 2 and 4 or 3.

0143588

1/4

FIG.1A.

FIG.1B.

FIG.2.

FIG. 3.

3/4

0143588

**FIG.4.**

SW2 Closed Stationary — SW2 Open Stationary — Too Slow — Correct Speed — Too Fast

VREF2, VREF1, VC1, 0
IC1(a) GREEN, 0
IC1(b), 0
VREF2, VREF1, VC2, 0
IC1(c) RED, 0